# EUROPEAN PATENT APPLICATION

(11) **EP 2 248 769 A2**
(43) Date of publication of application: **10.11.2010**
(21) Application number: 10160978.2
(22) Date of filing: 26.04.2010
(51) Int. Cl.: C02F 1/52, C02F 1/68, C02F 3/28, C02F 1/00

(54) **Purification method and purification device**

(30) Priority: 27.04.2009 FI 20095464
(71) Applicant: Fibox Oy Ab, 02150 Espoo (FI)
(72) Inventor: Nevasalo, Juha, 21160 Merimasku (FI)
(74) Representative: Äkräs, Tapio Juhani

(57) **Abstract**

The invention relates to a method and a device for purifying wastewater. According to the invention, the method comprises receiving (1-14) information on raw water supplied to a target; calculating (3-8), from this information, an amount of a chemical to be dosed; and dosing the chemical in to the wastewater according to the calculated amount.

## Description

### FIELD OF THE INVENTION

The invention relates to a purification method and a purification device, and particularly to enhancing removal of phosphorus from wastewaters.

### BACKGROUND OF THE INVENTION

Wastewater is water to be removed from use. It is generated in detached houses and summer cottages, for instance. In order for wastewaters not to contaminate, burden or deteriorate lakes, rivers, seas, swamps, ground waters, etc., they should be treated and purified before being returned to water systems. The aim in wastewater purification processes is to separate solids, organic matter, nutrients, microbes, and heavy metals from wastewaters. Also sludge, wherein a liquid contains small particles, may be separated from wastewater. Purification processes include biological-chemical simultaneous coagulation, pre- and postcoagulation, and ground infiltration.

However, large variations in the extent of the flow and burden of wastewaters during one day, week and year constitute problems for a purification process. The smaller the unit, the larger the variations. Problems occur both in the separation of sludge and in the dosing of chemicals. Currently, chemicals are dosed by a so-called time-dosage method. This means that at certain intervals, a chemical is fed to the purification process. However, since the method does not take into account the amount of wastewater, a problem in this method is that it is impossible to dose coagulant chemicals accurately with respect to a target. Furthermore, according to prior art, a chemical is dosed even if no wastewater is generated.

### BRIEF DESCRIPTION OF THE INVENTION

An object of the invention is thus to provide a method and an apparatus implementing the method so as to enable the above-mentioned problems to be alleviated. The object of the invention is achieved by a method and system that are characterized by what is stated in the independent claims. Preferred embodiments of the invention are disclosed in the dependent claims.

The invention is based on the idea of receiving information on raw water supplied to a target; calculating, from the received raw water information, an amount of water consumed in the target; and controlling a chemical dosing pump according to the amount of water consumed in the target. An advantage of the method and system according to the invention is accurate and inexpensive phosphorus removal from wastewaters in connection with ground filtration in particular, the invention and its preferred embodiments improving the efficiency thereof.

### BRIEF DESCRIPTION OF THE FIGURES

The invention is now described in closer detail in connection with preferred embodiments and with reference to the accompanying drawings, in which:
Figure 1 shows an arrangement according to the invention and its preferred embodiment;
Figure 2 shows an arrangement according to the invention and its preferred embodiment; and
Figure 3 shows a flow diagram according to the invention and its preferred embodiment.

### DETAILED DESCRIPTION OF THE INVENTION

The invention and its preferred embodiments may be applied to many different places where wastewater is generated. These targets include detached houses and summer cottages, for instance. The invention may be applied particularly to houses or buildings in sparsely populated areas that are not connected to the local sewerage system or that are not connected to the sewerage system because it is easy and inexpensive and, according to the invention also efficient, to carry out infiltration into the ground on one's own plot. The invention may also be applied in connection with a batch purification plant and a closed well. The invention and its embodiments enable the process of continuous purification, such as a ground infiltration method, to be improved and enhanced, and the invention may be described as a precision dosing method for chemicals, the precision dosing reducing migration of phosphorus to an infiltration field, for instance.

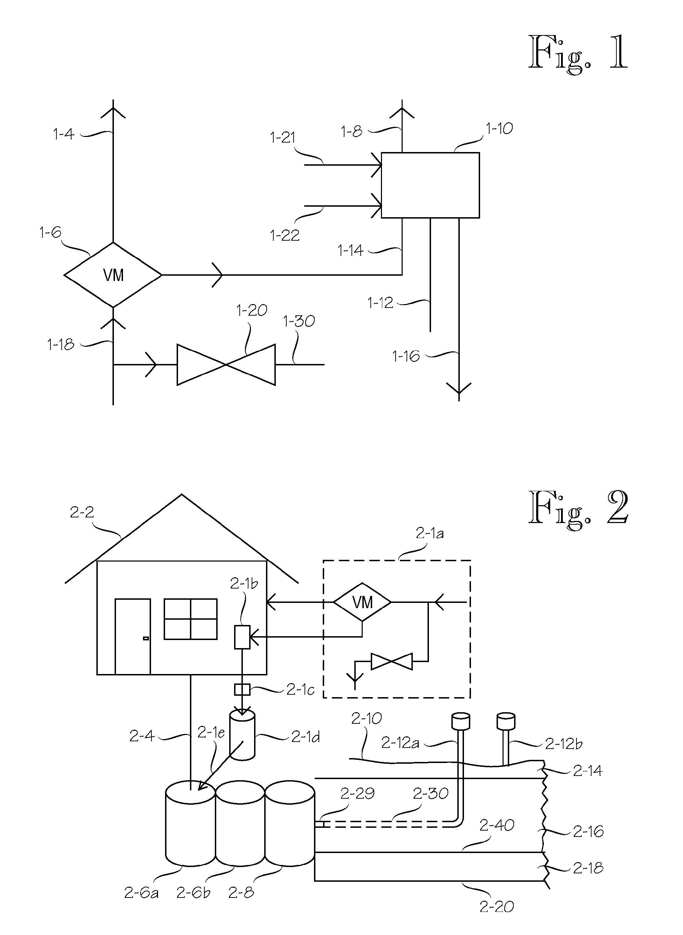

Figure 1 shows an arrangement according to the invention and its preferred embodiment. Water supplied to a target, e.g. a house or a building, runs in a water pipe 1-18. Said incoming water is measured by a water meter VM 1-6, and after the measurement the water continues its travel 1-4 towards the house or building. Before the water arrives at the water meter, it is possible by using a side inlet to draw water from the water pipe e.g. for watering a yard. A seal or valve 1-20 may be opened, and thus draw water off the main line and, by using a water pipe or hose 1-30, bring the water to its target. Lawn watering water or other corresponding water that does not end up in a sewer should be drawn before the water meter so as to prevent the watering water from being taken as wastewater. In such a case, the water is not considered as wastewater, either.

From the water meter, a signal or information is fed 1-14 to an element 1-10, which may be e.g. a programmable logic. The programmable logic may comprise fast and/or slow control, such as transistor control and/or relay control, respectively, and may receive also other information 1-21, 1-22, such as information on the wastewater quality, temperature, pH value, pressure, wastewater purification result, etc. On the basis of the received information, the logic may calculate information necessary in the controlling for a control element and control 1-16 the dosing pump. The calculation may be carried out as a function from one or more input values and/or predetermined values; such values may be values shown in menus of the logic. The dosing pump is operable and a chemical may be dispensed in to the wastewater only when wastewater is generated. The logic may also provide 1-8 various alarm information. Such information may be e.g. exceeding or not exceeding a certain limit value concerning e.g. time, amount of a chemical, and amount or quality of water. According to the invention and its preferred embodiment, such alarm information may be given in small and large houses or buildings, autonomous units and summer cottages, for instance. An alarm may also be information indicating that coagulation tanks are to be emptied and/or cleaned.

According to a preferred embodiment, the logic may also be provided with a water consumption or water flow maximum value/h or another time unit, such as a second, minute, day, month, year, a period, e.g. 200 l water/5 minutes, and if the particular value is exceeded, water inlet may be interrupted e.g. by controlling the water inlet to be turned off by a magnetic valve. This function may also be applied to houses or buildings to prevent extensive water damage. The function may be carried out by software, and it may be an option in the logic to be put to use in a product when necessary.

A device implementing this method comprises means for receiving information on the amount of liquid supplied to a target; receiving information on the time it took the amount of liquid to arrive at the target; comparing the information on the amount of liquid per time unit with a limit value; and if the limit value is exceeded, cutting off the inlet of liquid to the house or building by controlling the inlet of water to be closed by a magnetic valve. It is thus able to control either the calculation of the chemical amount to be dosed and/or the chemical dosing pump and/or the calculation of the flow of liquid and/or the cutting off and/or enabling the flow of liquid.

In order to operate, the logic requires a voltage 1-12, e.g. about 110 VAC or about 230 VAC. Alternatively, the invention may also be operable on a voltage of 12 VDC.

The logic is thus provided with information on the amount of water consumed and, on the basis of this information, it calculates the amount of water consumed. The logic is also able to control the dosing pump according to set values. In addition, the logic monitors and gives an alarm signal indicating that a chemical is exhausted and that a septic tank needs to be emptied, for instance. An acknowledgement of the alarm resets a respective counter.

The logic may be provided with various function menus. These include e.g. control of a chemical pump according to the amount of water consumed, such as 10 l, 20 l, 25 l, 50 l, 100 l, 150 l, or 200 l, consumption e.g. within a range of 10 to 200 l; operating time of the chemical pump e.g. within a range of 1 to 60 s; manual control of the chemical pump by a press button of the logic, the control being able to be used e.g. when a suction hose of the chemical pump is empty; the volume of a chemical tank e.g. within a range of 1 to 100 l; an alarm limit indicating that a chemical is exhausted, e.g. within a range of 1 to 20 l; an alarm indicating that a septic tank needs to be emptied at a predetermined point of time, e.g. at 3, 6, or 12 months or no alarm; an alarm mode menu; flashing rate and/or sound of a light and/or buzzer; and an acknowledgement of alarm.

The logic may receive information and send information either via a wireless or wired telecommunication connection.

Water consumption may be measured by many different sensors and meters. Information on water consumption may be received from a pulse meter, for example. As described above, this information may be fed to a logic circuit which may receive both information on water consumption and other information, sensed quantities and inputs. According to one or more mathematical models or by means of an equation, the logic circuit calculates the control for the dosing pump from the inputs fed to the circuit. The control may contain information on the amount of a chemical, i.e. information on the amount of a coagulation chemical to be dosed in to wastewater, or information on an amount of a chemical by which phosphorus may be coagulated, and information on the time and duration of control. The control may be a piece of information or a signal or a trigger to the pump or the control of the pump.

One piece of information to be inputted may be the quality of the wastewater. All wastewater or some of the wastewater or the quality thereof may be identified, and the amount of chemicals and the quality may be proportioned to the identification. It is also possible to proportion the amount of chemicals such that a certain amount of a certain chemical is added to discharge wastewater of a first type, whereas a certain but different amount of the same or another chemical is added to wastewater of a second type from the same house or building. This identification may be applied e.g. to weak wastewaters or to strong wastewaters. Wastewater of the first type may be wastewater generated e.g. by dishwashing and laundering, while wastewater of the second type may be lavatory water generated in lavatories. Wastewater generated in lavatories in connection with washing the hands may be classified as wastewater of the first type.

Since chemicals are used for the particular purpose of purifying wastewater, it is possible to measure the wastewater and calculate and feed a chemical proportionally to this amount. This also enables the amount of the target to be established accurately. If it is difficult to measure the amount of wastewater, the consumption of raw water may also be taken into account as a starting point, alternative, or addition. In sparsely-populated areas, water is often drawn from a well of one's own, and no water meter is provided on the premises. In such a case, first the house or building is to be provided with a water meter, such as a pulse water meter, to enable the amount of incoming water or raw water to be measured. The pulse meter gives a certain number of pulses per consumption, e.g. one pulse per one litre of water, or one pulse per ten litres of water. Water consumption per person may be estimated to be about 200 l per day. At an early stage, dosing at an accuracy of 1/10 l may be tried, i.e. a certain amount of a chemical per a certain amount of water, in this case one unit of a chemical, e.g. one ml of a chemical per 10 l of water. Alternatively, water consumption may be calculated according to the output of a pump. This method may produce a less accurate result. Different amounts of water run in different targets, but a certain type of water per person is fairly constant.

According to another alternative, it is possible to measure the output of a water pump by a back-pressure method and obtain a certain litre-per-minute result.

The method of purifying wastewater thus comprises steps of receiving 1-14 information either on water supplied to a house or building for consumption or on water being discharged from the house or building; calculating 3-8, from this information, an amount of a chemical to be dosed; and dosing the chemical in to the water being discharged from the house or building according to the calculated amount. Alternatively, the method enables information to be received both on the water supplied to the house or building for consumption and on the water being discharged from the house or building, and these both pieces of information to be taken into account when calculating the amount of a chemical to be dosed.

Furthermore, the method may further comprise a step of receiving 1-14 information on the time it took the amount of water supplied to the house or building for consumption to arrive at the target; comparing the information on the amount of water per time unit with a limit value; and if the limit value is exceeded, cutting off the inlet of water to the house or building by controlling the inlet of water to be closed by a magnetic valve.

Correspondingly, a device for purifying wastewater comprises means for receiving 1-14 information on water supplied to a house or building for consumption or on water being discharged from the house or building; calculating 3-8, from this information, an amount of water consumed in the house or building; and controlling 1-16 a chemical dosing pump for dosing a chemical according to the amount of water consumed in the house or building.

The device may further comprise means for receiving 1-14 information on the time it took the amount of water supplied to the house or building for consumption to arrive at the target; comparing the information on the amount of water per time unit with a limit value; and if the limit value is exceeded, cutting off the inlet of water to the house or building by controlling the inlet of water to be closed by a magnetic valve.

A chemical may be added to wastewater either in a time-controlled manner or according to consumption. In the time-controlled addition, a chemical is added after a certain time period or at a certain moment of time, and the dosing is not based on the amount of wastewater generated. In the consumption-based control, the incoming water and/or outgoing water is measured, and a chemical, such as a coagulation chemical, is added based on this measurement/these measurements, obtaining a correct dosing necessary at a precisely given time. Chemical consumption may also be measured in order for coagulation of phosphorus not to stop or reach its optimum level. The incoming water may be clean raw water, pumped water or even grey water, while the outgoing water may be grey water. The dosing may also be both time-controlled and based on consumption. The dosing may also be a function of other quantities or additional quantities, and the dosing may take place after a certain condition has been met or on the basis of an external trigger pulse.

Information on the amount, quality and/or moment of addition of a chemical may be obtained by real-time measurements, measurements whose results are provided non-real-time, based on sampling and laboratory testing and experiments. The setup values of a chemical or incoming or outgoing water may also be selected partly according to the house or building or the number of persons.

Chemicals to be used may be selected e.g. according to the quality of different wastewaters. A plurality of suitable different coagulation chemicals may be used. In chemical coagulation, a suitable coagulation chemical is added to wastewater to react with the soluble phosphorus present in the water, forming a phosphorus precipitate. This precipitate may be separated e.g. by clarifying. Either iron- or aluminium-based compounds or lime, for instance, may be used as coagulation chemicals. Ferrosulphate (FeS04), ferrisulphate (Fe2(SO4)3 or ferric chloride (FeCl3), for example, may serve as iron compounds. Aluminium compounds include e.g. aluminium sulphate (AlSO4) and polyaluminium chlorides (PAC). In addition, several chemicals having special properties and based on aluminium or iron or combinations thereof may be used. They may produce e.g. a particularly quickly descending precipitate. Furthermore, they are not particularly demanding as regards pH, and they may remove selectively either organic matter or phosphorus.

Figure 2 shows an arrangement according to the invention and its preferred embodiment. The figure also shows the arrangement 2-1 a of Figure 1, i.e. the water inlet in to the house or building, water meter, side inlet, and signal from the water meter to the logic. The chemical dosing apparatus 2-1 c may be placed e.g. such that the logic and the control unit 2-1 b are placed in a technical space of the house or building, wherein raw water and a sewer reside near one another. If the sewer is located at a great distance from the raw water inlet point, a control cable may be drawn to the dosing pump 2-1 c. The dosing pump may dose a chemical from a tank 2-1d in to the wastewater. The chemical may be fed to wastewater in the house or building, sewer or well. The water meter, side inlet, pump, and tank may also reside in the house or building. The chemical may be added to the wastewater 2-1e also inside the house or building.

An infiltration ditch, a system of infiltration ditches or an infiltration field is a wastewater treatment method dug into the ground and covered. Wastewater is purified during its travel and filtration through layers of natural soil, and then it becomes transferred in a decentralized manner to ground waters. In ground infiltration, the layers of soil serve as a mechanical, biological, and chemical wastewater purification plant. If the layers of soil are not suitable for infiltration, they may be replaced by suitable or better ones.

The wastewater is discharged from the house or building 2-2 via one or more sewers. The outgoing water being discharged from the house or building may be divided into one or more parts in the house or building. Thus, for example, in a first part the outgoing water may be outgoing wash water, so-called grey water, and in a second part it may be outgoing excremental product. In Figure 2, all wastewater travels along the same gravitation sewer 2-4 into one or more coagulation tanks 2-6a, 2-6b. In the one or more coagulation tanks or in a coagulation tank comprising one or more parts, matter heavier than water and matter lighter than water may be separated from the wastewater into bottom and surface matter, or sludge.

From the coagulation tank, the wastewater is led either directly or via a distribution well 2-8 to distributor pipes 2-29 and therefrom to actual infiltration pipes 2-30. The infiltration pipes are dug into the ground, and their inclination may be e.g. about 1%. From the perforated pipes, water is allowed to a distribution layer 2-18 made e.g. from crushed stone or coarse gravel. The bottom of a crushed stone layer may be horizontal. On top of the crushed stone, filling earth 2-16 may be placed, which may extend to the ground surface, or a landscaping layer 2-14, humus soil and/or lawn and plants may also be placed on top of the filling earth. A filter layer 2-40, e.g. a filter cloth, may be placed between the crushed stone and the filling earth. In the distribution layer, water spreads downwards and to the sides. The water may also reach the natural ground surface 2-10. In this infiltration surface 2-20 and immediately therebelow, a biologically active layer, a so-called biolayer, is formed. In this layer, micro-organisms, e.g. microbes, decompose most of the organic matter contained in the wastewater, i.e. they feed on and bind the wastewater burden. The purified wastewater is filtered deeper into the soil. As the wastewater sinks deeper, contaminants are filtered off and they bound chemically. According to an alternative, the infiltered water may be collected, by using by collecting pipes, from the bottom of the infiltration field to be conveyed to a collecting well or, alternatively, the water may be allowed to become infiltered into the soil over its entire area.

The infiltration ditch system may be constructed by digging separate ditch-like excavations. The infiltration field may be provided with several parallel infiltration pipes in a uniform excavation. Phosphorus is a nutrient that, owing to chemical reactions, is retained in soil particles. A vast majority of nitrogen in nitrate form is transferred deeper while only a fraction thereof evaporates and becomes bound in to plants or the soil. Usually, decomposition of organic matter, destruction of bacteria, and phosphorus bonding are sufficiently efficient already at a depth of about one metre.

The system according to Figure 2 is to be ventilated, and Figure 2 shows two ventilation pipes 2-12a, 2-12b of the system. The system reaches its full purification capacity in about 1 to 1.5 months after being constructed. A previously used system can be made to operate efficiently in even a week's time.

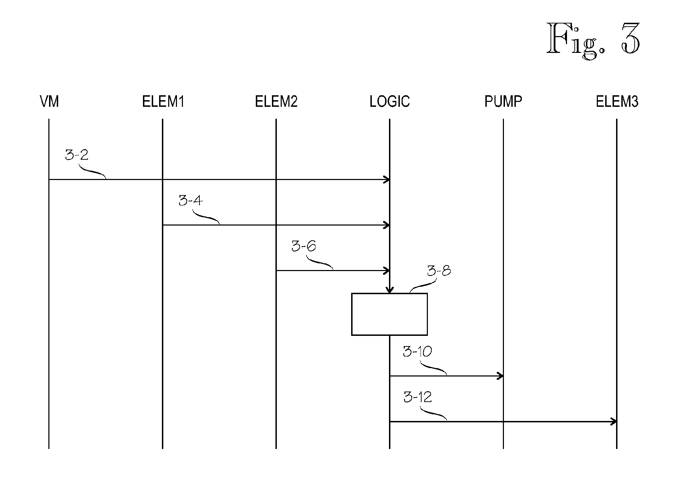

Figure 3 shows a flow diagram according to the invention and its preferred embodiment. In the figure, in step 3-2, information on water consumption is received by a logic LOGIC from a water meter VM. The logic may obtain information also from other elements or units, such as elements ELEM1 in step 3-4 and ELEM2 in step 3-6. Information may arrive at the logic element also in different stages. It will suffice that a necessary amount of information is received. Next, in step 3-8, the logic calculates output data from input data and sends necessary information in step 3-10 to a dosing pump PUMP and/or to a third element ELEM3, e.g. to an alarm device. According to an embodiment, information may return from a pump and/or a sensor to a logic element in the form of feedback. The logic may use also this information when calculating or iterating for the next piece of information to be outputted to the pump.

According to the invention and its preferred embodiments, the method of purifying wastewater comprises receiving information on raw water supplied to a target; calculating, from this information, an amount of a chemical to be dosed; and dosing the chemical in to the wastewater according to the calculated amount. From the received raw water information, it is also possible to calculate the amount of water consumed in the target, and the chemical dosing pump and/or the dosing calculation process may be controlled according to either amount or both amounts of water. In addition, it is possible to receive information about the wastewater and/or phosphorus removal in the wastewater and, in response to this information, to control the calculation of the amount of a chemical to be dosed or the chemical dosing pump. The control may also take place in response to an external trigger pulse or according to time. It is also possible to deduct pre-water-meter water consumption from the raw water information. According to still another alternative, it is possible to receive information on raw water supplied from more than one input, or to receive information on wastewater being discharged from more than one output, and the calculation process may utilize these two pieces of information.

The invention also relates to computer software comprising program code means configured to perform any method steps according to the invention and its preferred embodiments when the program is run by a processor.

The arrangement and method according to the invention and its preferred embodiments are suitable for both small and large targets, and a correct amount of a coagulation chemical is always dosed in to the amount of wastewater generated. By changing the set values of the logic, the apparatus is suitable for dosing a chemical for the wastewaters from a house or houses or a building or buildings accommodating even several dozens of people. The apparatus enables various alarm expressions, detections, signallings and alarms to be integrated or introduced thereto. The logic of the device may monitor the consumption of chemicals e.g. such that it receives alarm data or data associated with an alarm, processes said data, and gives alarms according to the set values. Similarly, the logic may monitor a need to empty a septic tank.

According to the invention and its preferred embodiments, the device and its control actions enable a very accurate real-time dosing of chemicals in to wastewaters, e.g. wastewaters from a lavatory, W.C., or in to other liquids or foodstuff liquids, and/or cutting-off a flow of liquids, such as water or foodstuff liquids or chemical liquids. Furthermore, the invention and its preferred embodiments enable results in phosphorus removal that are better, more accurate and more efficient than those obtained by the existing dosing methods.

According to the invention and its preferred embodiments, many different pumps may be used as a chemical pump. Suitable pumps include e.g. a simple, reliable, and inexpensive pump that can be directly controlled by a pulse from a logic circuit. The chemical pump enables a chemical to be dosed accurately, and even small amounts at an accuracy of 1 ml, for instance. The amount of dosing and the frequency thereof with respect to the amount of wastewater generated may be determined e.g. according to a purification result obtained while testing the dosing apparatus.

An advantage of the method, device, and arrangement according to the invention and its preferred embodiments is e.g. that it is both an accurate and inexpensive way to purify water. The invention and its preferred embodiments are suitable to be used in small houses or buildings that are not connected or coupled to the general sewerage system.

It is apparent to one skilled in the art that as technology advances, the basic idea of the invention may be implemented in many different ways. The invention and its embodiments are thus not restricted to the above-described examples but may vary within the scope of the claims.

## Claims

1. A method of purifying wastewater, **characterized by** the method comprising:
receiving (1-14) information either on water supplied to a house or building for consumption or on water being discharged from the house or building;
calculating (3-8), from this information, an amount of a chemical to be dosed; and
dosing the chemical in to the water being discharged from the house or building according to the calculated amount.

2. A method as claimed in claim 1, **characterized by** receiving information both on the water supplied to the house or building for consumption and on the water being discharged from the house or building, and taking into account these both pieces of information when calculating the amount of a chemical to be dosed.

3. A method as claimed in claim 1 or 2, **characterized by** receiving also information about phosphorus removal in the wastewater and in the calculation of the amount of a chemical to be dosed.

4. A method as claimed in any one of the preceding claims 1 to 3, **characterized by** dosing the chemical in response to an external trigger pulse or according to time.

5. A method as claimed in any one of the preceding claims 1 to 4, **characterized by** a chemical dosing pump employing iron- or aluminium-based compounds, or chemicals based on aluminium or iron or combinations thereof, or lime.

6. A method as claimed in claim 5, **characterized by** the chemical being one or more of the following chemicals: ferrosulphate (FeSO4, ferrisulphate (Fe2(SO4)3, ferric chloride (FeCl3), aluminium sulphate (AlSO4), or polyaluminium chlorides (PAC).

7. A method as claimed in any one of the preceding claims 1 to 6, **characterized by** giving an alarm signal in response to a chemical being exhausted or a need for a septic tank to be emptied.

8. A method as claimed in any one of the preceding claims 1 to 7, **characterized by** deducting pre-water-meter water consumption from the water supplied to the house or building for consumption.

9. A method as claimed in any one of the preceding claims 1 to 8, **characterized by** the method further comprising:
receiving (1-14) information on the time it took the amount of water supplied to the house or building for consumption to arrive at the target;
comparing the information on the amount of water per time unit with a limit value; and
if the limit value is exceeded, cutting off the inlet of water to the house or building by controlling the inlet of water to be closed by a magnetic valve.

10. A device for purifying wastewater, **characterized in that** it comprises means for:
receiving (1-14) information on water supplied to a house or building for consumption or on water being discharged from the house or building;
calculating (3-8), from this information, an amount of water consumed in the house or building; and
controlling (1-16) a chemical dosing pump for dosing a chemical according to the amount of water consumed in the house or building.

11. A device as claimed in claim 10, **characterized in that** it further comprises means for:
receiving (1-14) information on the time it took the amount of water supplied to the house or building for consumption to arrive at the target;
comparing the information on the amount of water per time unit with a limit value; and
if the limit value is exceeded, cutting off the inlet of water to the house or building by controlling the inlet of water to be closed by a magnetic valve.

12. Computer software comprising program code means configured to perform any steps according to any preceding claim 1 to 9 when the program is run by a processor.

13. A method of cutting off a flow of liquid, **characterized by** the method comprising:
receiving (1-14) information on the amount of liquid supplied to a target;
receiving (1-14) information on the time it took said amount of liquid to arrive at the target;
comparing the information on the amount of liquid per time unit with a limit value; and
if the limit value is exceeded, cutting off the inlet of liquid to the target by controlling the inlet of water to be closed by a magnetic valve.

14. A device for cutting off a flow of liquid, **characterized in that** it is arranged to:
receive (1-14) information on the amount of liquid supplied to a target;
receive (1-14) information on the time it took said amount of liquid to arrive at the target;
compare the information on the amount of liquid per time unit with a limit value; and
if the limit value is exceeded, cut off the inlet of liquid to the target by controlling the inlet of water to be closed by a magnetic valve.

15. Computer software comprising program code means configured to perform any steps according to claim 14 when the program is run by a processor.
